# EUROPEAN PATENT APPLICATION

(11) **EP 3 718 924 A1**
(43) Date of publication of application: **07.10.2020**
(21) Application number: 19167017.3
(22) Date of filing: 03.04.2019
(51) Int. Cl.: B65D 81/38, B65D 77/04

(54) **CONTAINER SYSTEM**

(71) Applicant: Storopack Hans Reichenecker GmbH, 72555 Metzingen (DE)
(72) Inventor: BELLIER, Christian, 44150 Vair sur Loire (FR)
(74) Representative: DREISS Patentanwälte PartG mbB

(57) **Abstract**

A container system (10) is intended for receiving goods (38) to be thermally conditioned. It comprises a first container (12) and a second container (14) wherein the first container (12) can be arranged inside the second container (14) at least partially. The first container (12) comprises a thermally insulating material. It is suggested that the first container (12) is a disposable one-way container and the second container (14) is a reusable container.

## Description

The present invention relates to a container system for receiving, in particular for storing and/or transporting, goods to be thermally conditioned according to the preamble of claim 1.

US 2014/0151382 A1 discloses an insulated container system and a temperature-controlled insert that is configured to maintain a payload chamber temperature over a minimum length of time to enable goods within the payload chamber to be shipped over distances while being maintained within a desired temperature range. The known container system comprises an external carton in which a plurality of insulative layers can be arranged.

It is an object of the present invention to provide a container system having an improved ecological footprint and being cost efficient.

This object is achieved with a container system having the features of claim 1 and with a first and or second container having the features of the independent claim. Further embodiments are claimed in the dependent claims. Other features which are important for the invention are given in the following description and in the attached drawing wherein these features may be relevant for the invention alone or in various combinations as well.

The inventive container system is intended and designed for receiving goods. By way of example, the container system may comprise an inner volume which is delimited by one or more walls such that one or more objects may placed within this volume, and which is designed to hold the one or more objects within the volume for example for storage and/or transportation purposes. The walls may be of full material or may be framework-type leaving openings between the frame struts.

One object of the inventive container is to provide the possibility to receive such goods which have to be thermally conditioned. The latter expression is to be understood in a broad sense and, by way of example, includes a conditioning which keeps or brings the good stored in the container system at a thermal condition which at least for a certain period of time is different from the thermal condition of the environment.

The inventive container system comprises a first container and a second container wherein the first container can be arranged inside the second container at least partially. By way of example, the first (inner) container substantially may have the same height as the second (outer) container, or may have a greater height or a smaller height. The first container comprises a thermally insulating material, and this first container at the same time is a disposable one-way container. It is therefore used only once for a specific storage and/or transportation task, and is disposed after the task has been accomplished. The first container therefore may comprise an indication that it must be used only once. Since it must be used only once, any protective layer or other protection means which inhibits penetration of fluid or the like from the good into the material of the first container may be omitted. In contrast hereto, the second container is a reusable container which after the storage and/or transportation task has been accomplished may be cleaned and then reused for another storage and/or transportation task and with another disposable one-way container placed therein.

An important advantage of the inventive container system is that the first container which provides the thermal insulation capabilities may be extremely simple and therefore very cheap. Though, it may comply with the highest hygienic standards because it is a new and fresh and thus non-contaminated container prior to each use. The second container mainly provides for the structural support and stability and for the protection of the first container and therefore in normal cases of use is not in direct contact or only in little direct contact with the goods to be stored and/or transported. It therefore may be easily cleaned and thus prepared for a further use.

Another advantage is that the inventive container system has an improved ecological footprint because 50% of the used parts (namely the second container) can be reused and need only little cleaning prior to the next use. The first disposable containers of the inventive container system may be collected and then centrally processed, for example for and/or by recycling.

In a further preferred embodiment the first container is foldable. It therefore can be produced and stocked in a very cheap way and be erected only when being placed within the second container. This again saves production and storage costs.

In a further preferred embodiment the first container comprises a base plate and at least four side plates, the side plates being substantially parallel to the base plate in a non-use state and the side plates being erected with regard to the base plate in a use state such that an angle between the side plates and the base plate is in the range of approximately 90°-120°. The first container therefore in a non-use state may be substantially flat and therefore requires only little storage place. The hinges between the base plate and the side plates may be realized integrally with both plates, by way of example by means of material bridges having a reduced thickness and thus providing an increased flexibility. Since the hinges are used only once when the first container is erected, the hinges may have a rather low stability.

In a further preferred embodiment of the inventive container system the side plates in the non-use state extend from the base plate substantially outwardly. This allows for a cheap manufacturing process.

In a further preferred embodiment the second container is foldable. This saves production and storage costs.

In a further preferred embodiment the second container comprises a base plate and at least four side plates, the side plates being substantially parallel to the base plate in a non-use state, and the side plates being erected with regard to the base plate in a use state such that an angle between the side plates and the base plate is in the range of approximately 90°-120°. The second container therefore in a non-use state may be substantially flat and therefore may require only little storage place.

In a further preferred embodiment the side plates in the non-use state extend from a respective edge of the base plate substantially inwardly. This reduces the required space for storage and therefore reduces storage costs.

In a further preferred embodiment the second container is one of a plurality of containers which are stackable within each other. This again reduces storage costs and handling time.

In a further preferred embodiment the first container comprises a polymer foam, preferably EPS (expandable polystyrene), and/or a biodegradable material. A polymer foam material has very good thermal insulation characteristics, is cheap, can easily be recycled and allows the manufacture of a lightweight first container. The same applies also to many biodegradable and/or biologic materials, such as starch or natural textile type materials, which are very positive from an ecological standpoint.

In a further preferred embodiment the second container comprises a hard plastic material. This provides for a good structural support and protection of the first container and is easy and cheap to manufacture.

In a further preferred embodiment the first and/or the second container is manufactured by means of mold injection. This is cheap and allows to produce a large variety of shapes.

In a further preferred embodiment an exterior shape of the first container substantially matches with an interior shape of the second container. Thus, the outer surface of the first container substantially two-dimensionally contacts the inner surface of the second container and therefore is very good supported and protected.

In a further preferred embodiment the first and the second container are upwardly open which allows easy access to the inner volume of the container system for loading and unloading.

In a further preferred embodiment the first container is upwardly closed and the second container is upwardly open. This allows to protect the goods contained within the inner volume of the container system, and improves the thermal insulation and thus the thermal conditioning of the goods.

The invention will now be described with reference to the attached drawings.
- Figure 1: is a schematic perspective view on a first embodiment of a container system comprising a first and a second container, wherein the first container is shown in a non-use and in a use state;
- Figure 2: is a side view of a plurality of second containers of figure 1 which are stacked within each other;
- Figure 3: is a schematic perspective view on a second embodiment of a container system comprising a first and a second container, wherein the first container is shown in a non-use and in a use state; and
- Figure 4: is a schematic perspective view on a third embodiment of a container system comprising a first and a second container.

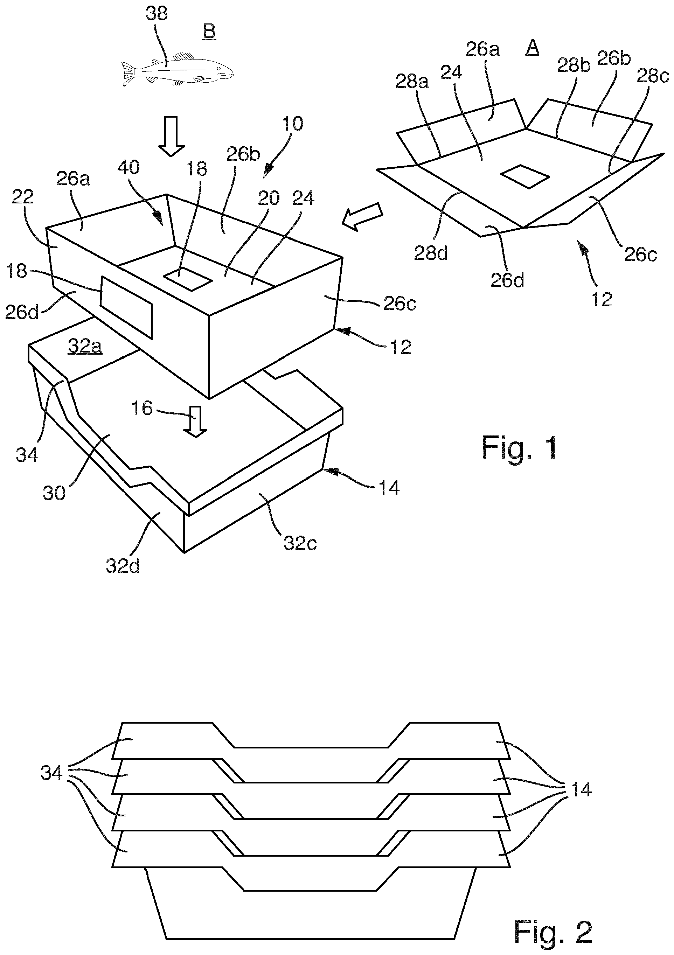

A first embodiment of a container system 10 is shown in figures 1 and 2. It is designed and intended to be used for transporting and storing goods which shall be thermally conditioned. The goods may be of any type, such as food (meat, fish, seafood, fruits, vegetables, et cetera) or such as drugs or the like. A very typical application of the container system 10 is the presentation of fishes, seafood, and the like on a fish market. The thermal conditioning normally consists in keeping the goods at a temperature which is lower than the ambient temperature. Therefore, the container system 10 provides a thermal insulation characteristic, as will be shown in detail further below.

The container system 10 comprises a first container 12 and a second container 14. As indicated in figure 1 by an arrow 16, the first container 12 can be arranged inside the second container 14 at least partially. The first container 12 comprises a polyethyelene foam, by way of example an expandable polystyrene (EPS) which is a thermally insulating material and, as such, provides the above mentioned thermal insulation characteristic. It might also be manufactured from a biodegradable and/or biologic material, such as starch or a natural textile type material. The second container 14 comprises a relatively hard plastic material.

While the second container 14 is a reusable container which, by way of example, after completion of a storage and/or transportation task and after cleaning by washing or the like can be reused for another storage and/or transportation task, the first container 12 is a disposable one-way container which must be used only once, that is only for one storage and/or transportation task. After completion of a specific storage and/or transportation task, the one-way container 12 is disposed and, by way of example, transported to a recycling facility where it is shredded or melt or the like, and the obtained raw material then can be used to form either a completely different product or again a first container 12.

In order to indicate to a user that the first container 12 must not be reused, it comprises a number of markings 18 on its inner surfaces 20 and on its outer surfaces 22 which clearly instruct a user by plain language and also by internationally comprehensive pictograms to refrain from reusing the first container 12 for a second storage and/or transportation task after completion of a first storage and/or transportation task.

In order to prevent a user from reusing the first container 12 after completion of a specific storage and/or transportation task, the first container 12 may comprise, by way of example, a colour indicator which is activated when the first container 12 is placed for the first time inside the second container 14, and which, after a certain amount of time after its activation, changes its colour, by way of example from green to red, in order to indicate to a user that the first container 12 now is in a condition to be disposed. Though, it is also possible that a user may decide after a visual inspection whether the first container 12 is to be disposed or not.

In the embodiment of the figures 1 and 2, the first container 12 is a foldable container. In a non-use state which is shown in figure 1 on the right side and indicated by a capital letter A, the first container 12 comprises a substantially rectangular base plate 24 and four rectangular side plates 26a-d. The base plate 24 and the side plates 26a-d are unitary. Hinges 28a-d are formed between the base plate 24 and the side plates 26a-d by means of material bridges, providing a sufficient flexibility to allow the side plates 26a-d to be bent from the non-use state A into a use state which is shown in figure 1 on the left side and indicated by the capital letter B.

As can be seen from figure 1, in the non-use state A the side plates 26a-d are substantially parallel to the base plate 24 and extend from the base plate 24 substantially outwardly. Further, in the use state B the side plates 26a-d are erected with regard to the base plate 24 such that an angle between the side plates 26a-d and the base plate 24 is greater than 90°. In other non-shown embodiments, the angle between the side plates and the base plate can be substantially equal to 90°, preferably be in the range of approximately 90°-120°.

Both the first container 12 and the second container 14 are upwardly open and are manufactured by means of injection molding. Further, an exterior shape of the first container 12 substantially matches with an interior shape of the second container 40, and the dimensions of both containers 12 and 14 are such that the first container 12 substantially snugly fits into the second container 14. By consequence, the second container 14 which is made of a relatively hard plastic material provides a sufficient structural support for the first container 12 which is made of a soft foam material having a relatively low structural strength.

The second container 14 comprises a base plate 30 and four side plates 32-d. The base plate 30 and the side plates 32a-d are unitary, and the side plates 32a-d are fixed to each other at their side edges (without reference signs), such that a rigid and hard box-type second container 14 is formed. An angle between the side plates 32a-d and the base plate 30 is, by way of example, approximately 105°. This allows, as is shown in figure 2, the second container 14 to be one of a plurality of second containers 14 which are stackable within each other. In other, non-shown embodiments, said angle may be lower or higher than 105°, preferably be in the range of approximately 90° to 120°. The second container 14 comprises an upper edge region 34 which is bent outwardly by 180°, such that handling of the second container 14 is facilitated.

The container system 12 is used as follows: first, a first container 12 is taken in the non-use state A as it appears directly after manufacturing, that is after foaming. The first container 12 then is brought into the use state B by erecting the side plates 26a-d to form a box-type first container 12 as shown on the left side of figure 1. This erected first container 12 then is placed within the second container 14, as is indicated by arrow 16, such that the first container 12 snugly fits into the second container 14. Now, the first container 12 and the second container 14 build the container system 10 as mentioned above. A good, such as, by way of example, a fish 38, now may be placed in an inner volume 34 of the container system 10, the inner volume 34 being delimited substantially by the base plate 24 and the side plates 26a-d of the first container 12.

With the good 38 placed within the container system 10, the container system 10 may be transported from one location to another location, and during this transportation the good 38 is kept in a desired thermally conditioned state at least for a certain amount of time because of the thermally insulating characteristic of the first container 12. Also, with the good 38 placed within the inner volume 40 of the container system 10, the good 38 may be presented for example in a fish market to potential customers, while it is kept in a desired thermally conditioned state at least for a certain amount of time.

After completion of the storage and/or transportation task, the first container 12 is removed from the second container 14 and is disposed, by way of example, at a location where also other second containers 14 of the same material are disposed, such that all these second containers 14 then can be recycled by an appropriate recycling facility. In contrast hereto, the second container 14 is cleaned up, eventually is disinfected, and then is provided again to a user for a next storage and/or transportation task together with a new first container 12 in order to build a new and proper container system 10.

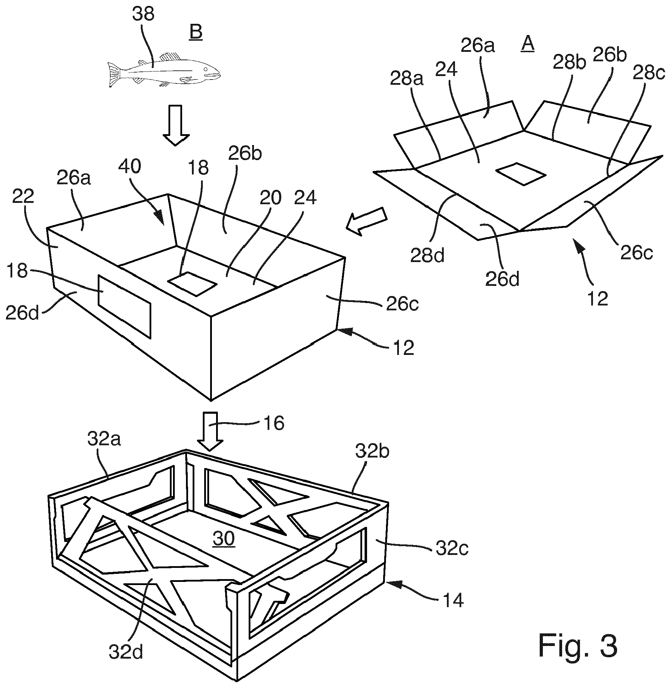

Now, reference is made to figure 3 which shows a second embodiment of a container system 10. It is to be noted that in figure 3 and subsequent figures such elements and regions which have functions being equivalent to functions of elements and regions which have been mentioned with regard to a previous embodiment, are designated with the same reference signs. In order to avoid repetitions, in the following only differences with respect to previous embodiments will be explained in detail.

The first container 12 of the container system 10 of figure 3 is almost the same as the first container 12 of figures 1 to 2. One difference is that the angle between the side plates 26a-d on the one hand and the base plate 24 on the other hand in the use state B is more or less equal to 90°.

The second container 14 of the container system 10 of figure 3 is a container wherein the side plates 32a-d in a non-use state (not shown) extend from a respective edge of the base plate 30 substantially inwardly such that the side plates 32a-d are substantially parallel to the base plate 30 in this non-use state B. The side plates 32a-d are not massive full material side plates but rather framework-type plates made of a hard and solid plastic material in order to save weight and costs. There might be provided specific hinges between the side plates 32a-d and the base plate 30 which allow to fold and unfold (that is to erect) the side plates 32a-d relative to the base plate 30 repeatedly a plurality of times.

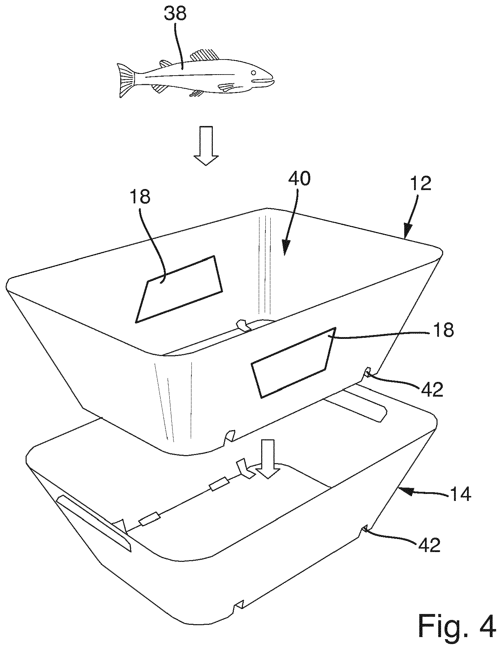

Figure 4 shows a third embodiment of a container system 10. In this embodiment, none of the first container 12 and the second container 14 is foldable. Instead, both the first container 12 and the second container 14 are fixed without any movable portions. Both the first container 12 and the second container 14 have openings 42 in the region of the edges between the base plate 24 and the side plates 26a-d and the base plate 30 and the side plates 32a-d, respectively, which allow any fluid which is caused by the good placed within the inner volume 40 of the container system 10 to leave this inner volume 40.

In any of the above mentioned and described embodiments, it is possible to provide a movable closure element which allows to upwardly close the first container, while the second container remains upwardly open.

It is also to be noted that, while all above described embodiments have container is of a substantially rectangular ground shape, also many other shapes are possible, such as round ground shapes with one circumferential side wall.

## Claims

1. A container system (10) for receiving, in particular for storing and/or transporting, goods (38) to be thermally conditioned comprising a first container (12) and a second container (14) wherein the first container (12) can be arranged inside the second container (14) at least partially, and wherein the first container (12) comprises a thermally insulating material, **characterized in that** the first container (12) is a disposable one-way container and the second container (14) is a reusable container.

2. The container system (10) of claim 1 wherein the first container (12) is foldable.

3. The container system (10) of claim 2 wherein the first container (12) comprises a base plate (24) and at least four side plates (26a-d), the side plates (26a-d) being substantially parallel to the base plate (24) in a non-use state (A) and the side plates (26a-d) being erected with regard to the base plate (24) in a use state (B) such that an angle between the side plates (26a-d) and the base plate (24) is in the range of approximately 90°-120°.

4. The container system (10) of claim 3 wherein the side plates (26a-d) in the non-use state (A) extend from the base plate (24) substantially outwardly.

5. The container system (10) of at least one of the preceding claims wherein the second container (14) is foldable.

6. The container system (10) of claim 5 wherein the second container (14) comprises a base plate (30) and at least four side plates (32a-d), the side plates (32a-d) being substantially parallel to the base plate (30) in a non-use state (A), and the side plates (32a-d) being erected with regard to the base plate (30) in a use state (B) such that an angle between the side plates (32a-d) and the base plate (30) is in the range of approximately 90°-120°.

7. The container system (10) of claim 6 wherein the side plates (32a-d) in the non-use state (A) extend from a respective edge of the base plate (30) substantially inwardly.

8. The container system (10) of at least one of the preceding claims wherein the second container (14) is one of a plurality of containers (14) which are stackable within each other.

9. The container system (10) of at least one of the preceding claims wherein the first container (12) comprises a polymer foam, preferably EPS (expandable polystyrene), and/or a biodegradable and/or biologic material.

10. The container system (10) of at least one of the preceding claims wherein the second container (14) comprises a hard plastic material.

11. The container system (10) of at least one of the preceding claims wherein at least one the first and second container (12, 14) is manufactured by means of mold injection.

12. The container system (10) of at least one of the preceding claims wherein an exterior shape of the first container (12) substantially matches with an interior shape of the second container (14).

13. The container system (10) of at least one of the preceding claims wherein the first and the second container (12, 14) are upwardly open.

14. The container system of at least one of claims 1 to 12 wherein the first container is upwardly closed and the second container is upwardly open.

15. A first and/or second container (12, 14) to be used in the container system (10) of at least one of the preceding claims.
